# EUROPEAN PATENT SPECIFICATION

(11) **EP 1 747 504 B1**
(45) Date of publication and mention of the grant of the patent: **06.02.2008**
(21) Application number: 05737024.9
(22) Date of filing: 08.04.2005
(51) Int. Cl.: G06F 21/00

(54) **PREVENTING CLONING OF HIGH VALUE SOFTWARE USING EMBEDDED HARDWARE AND SOFTWARE FUNCTIONALITY**
VERHINDERUNG DES KLONENS HOCHWERTIGER SOFTWARE UNTER VERWENDUNG EINGEBETTETER HARDWARE- UND SOFTWAREFUNKTIONALITÄT
PREVENTION DU CLONAGE DE LOGICIEL DE GRANDE VALEUR AU MOYEN D'UNE FONCTIONNALITE MATERIELLE ET LOGICIELLE INTEGREE

(30) Priority: 19.04.2004 US 563215 P; 03.03.2005 US 71079
(43) Date of publication of application: 31.01.2007
(73) Proprietor: Syphermedia International, Inc., Aliso Viejo, CA 92656 (US)
(72) Inventor: GAGNON, Gregory, J., Torrance, CA 90277 (US); COCCHI, Ronald, P., Seal Beach, CA 90740 (US); FLAHARTY, Dennis, R, Irvine, CA 92610 (US)
(74) Representative: Collins, John David
(86) International application number: PCT/US2005/011867
(87) International publication number: WO 2005/106621

(56) References cited:
- WO-A-02/01333
- US-A- 4 757 534
- US-A- 5 790 663
- US-A- 5 940 504
- US-B1- 6 681 212

## Description

### BACKGROUND OF THE INVENTION

### 1. Field of the Invention.

The present invention relates generally to software products, and in particular, to a method, apparatus, and article of manufacture for preventing cloning of software using embedded hardware and software functionality.

### 2. Description of the Related Art.

Electronics and software have become part of everyday life. Automobiles, Compact Disc (CD) players, computers, Personal Data Assistants (PDAs), personal and home-based game consoles, and many other consumer electronic devices have integrated software installed.

Companies spend millions of dollars annually to design, write, debug, and distribute the software that is used on these devices. Such a large marketplace has also become a very lucrative business for software pirates that copy the software for sale on the black market, which undercuts the profits that legitimate software producers can make. Piracy issues often become a factor in a legitimate software producer's business decisions.

Some software companies require passwords to use their software, however, pirates can merely purchase a legitimate copy, obtain the password, and forward that password along with the pirated copy. End users will not see any difference in functionality between the legitimate and pirated copies.

Even when software companies are integrated in some fashion with the hardware platforms that the software will be used on, pirates have copied the hardware exactly, extracted the software, and copied the baseline software from one unit to another. Such "cloning" techniques are relatively inexpensive for the pirates to perform, and are very profitable for the pirates.

Even though anti-piracy efforts have increased in recent years, pirates can make enough profit in a short time, with minimal cost, to run the risk of litigation. The period of time from introduction of pirated goods to the market place to the time the pirated goods are noticed, to the time that the pirates are located, is enough time for the pirates to make enough money and avoid capture, even if they have to abandon the cloning of a particular product.

Current techniques to prevent cloning of software within a hardware application, such as a Set Top Box (STB) application used in delivery of television programming, or computer software, etc., typically rely on the use of a third party security chip. This chip resides on the motherboard and interacts with the host CPU or data transport chip. This requires the hardware design of the system to be modified to include the security chip. Inclusion of additional hardware, and interfacing this additional hardware to the application design and manufacture, is a costly effort for the hardware designers. Further, the host software must be modified to interact with the secondary security chip. Again, this is a costly effort since the code now can only be used or tested on units that have this secondary chip. Finally, even if the security chip is present, pirates can intercept the communications between the security chip and the Transport Chip so the security aspects of the software can be disabled, and the software can then be cloned.

US 6,681,212 B1 (Nianning Zeng) 20 Jan. 2004 (20.01.2004) discloses a system for increasing the difficulty of cloning software according to the preamble of independent claim 9. However, this system does not protect the software manufacturer against malicious serialisation servers.

The typical software company is also paid by the Original Equipment Manufacturer (OEM) based on the number of units that the OEM sells. It is difficult for the software company to determine exactly how many units the OEM sold for a given period, and, thus, relies on the OEM to determine the amount of royalty that is due the software company. Errors, whether intentional or not, result in incorrect payments to the software company.

As such, it can be seen that there is a need in the art for a method to make it more difficult for the pirates to succeed in their piracy efforts. It can also be seen that there is a need in the art for software that can be counted easily to determine proper royalty payments.

### SUMMARY OF THE INVENTION

To minimize the limitations in the prior art, and to minimize other limitations that will become apparent upon reading and understanding the present specification, the present invention concerns a method and a system as specified in independent claims 1 and 9.

Embodiments of the invention provide methods and apparatuses for increasing the difficulty of cloning high-value software. A system in accordance with the present invention comprises a secure transformation engine, which receives and combines source code and configuration data to generate a software listing, a compiler, coupled to the secure transformation engine, for compiling the software listing and generating a compiled listing, a metadata generator, coupled to the compiler, for integrating hardware specific metadata with the compiled listing to generate an unserialized image, a headend server, a serialization master server, and a serialization server, which receives the unserialized image and serializes the unserialized image using dynamic and/or pre-programmed values generated by the headend server or calculated by the serialization master server.

### BRIEF DESCRIPTION OF THE DRAWINGS

Referring now to the drawings in which like reference numbers represent corresponding parts throughout:
FIG. 1 illustrates the functional flow of the present invention;
FIG. 2 illustrates a block diagram of how an unserialized binary image is generated utilizing the present invention;
FIG. 3 illustrates the hardware security features of the present invention;
FIG. 4 illustrates a functional overview of a chip designed in accordance with the present invention; and
FIG. 5 is a flowchart illustrating the steps of the present invention.

### DETAILED DESCRIPTION OF THE PREFERRED EMBODIMENTS

In the following description, reference is made to the accompanying drawings which form a part hereof, and which is shown, by way of illustration, several embodiments of the present invention. It is understood that other embodiments may be utilized and structural changes may be made without departing from the scope of the present invention as defined by the appended claims.

### Overview

The present invention is a method and apparatus to reduce the incidence of cloning of high value software. The present invention uses cryptographic coupling of the software to embedded security features of system critical hardware.

A key design philosophy of this method is to use a layered approach in the security features. As will be detailed below, the present invention provides numerous hardware and software hurdles that must be overcome in order to successfully defeat the intended security functionality. It is not the intent of this tool to make it impossible to defeat these security issues, but to make it so expensive or cumbersome to distribute a successful attack that it is not commercially viable for pirates or other third parties to do so.

Another aspect of the present invention provides the software and hardware companies with a secure and trusted accounting for the number of units produced by a manufacturer. Currently, there is no way for these companies to audit the claims of the manufacturer on the number of systems produced. If the manufacturer intentionally or unintentionally miscounts the number of units made, the royalties paid to the software and hardware companies will be equally miscounted. This is a significant problem especially for software companies since in many instances they have no direct relationship with the unit manufacturer. This leaves the software company with no verifiable way of determining whether or not they are being paid the correct amount of royalties.

The method disclosed herein reduces the possibilities of cloning of the software from the original unit to any other unit. This application can be used in several different applications, e.g., personal computer (PC) software applications, STB applications, gaming software applications, cell phone software applications and personal data assistant (PDA) software applications.

Typically, software is generated separately from the hardware that the software will be resident on or used on. The present invention provides an encryption to the software to allow the software to be generic as it is shipped to the hardware manufacturer, and yet secure because of the encryption. Further, the present invention provides a serialization of the software such that each copy of the software is mated to a specific piece of hardware, such that the software and hardware are mated together in a serialized fashion at the hardware facility. The serialization process involves a third party serialization manager which uses hardware specific data to uniquely serialize the software, as well as hardware features that are embedded in the hardware which augment the security features.

### Functional Flow

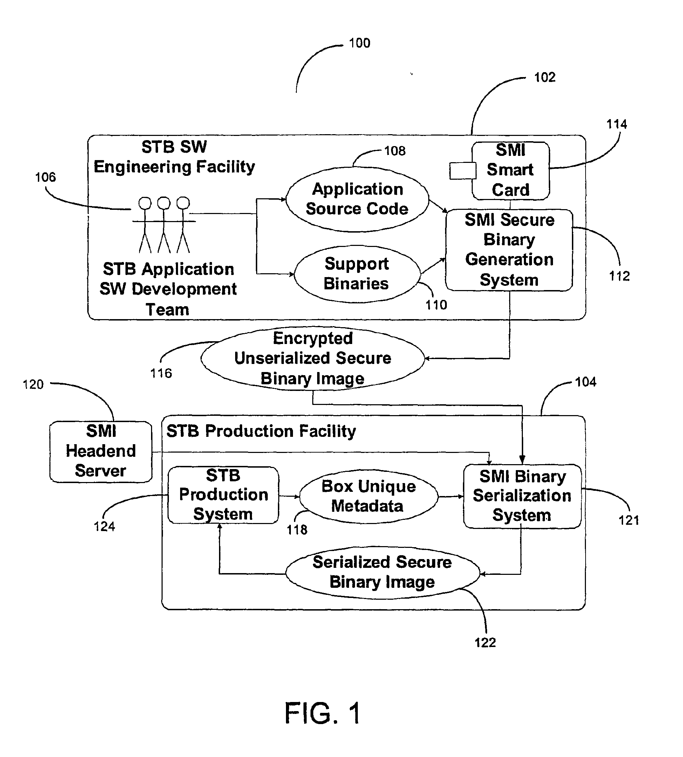

FIG. 1 illustrates the functional flow of the present invention.

The software tool of the present invention comprises several separate functions. These functions can be used separately, or in combination, to provide different levels of security. Some manufacturers may wish to provide different levels of security for different products, or some manufacturers may wish to provide different levels of security altogether. The present invention can be used by integrating several of the tools, or using only one or two of the tools listed herein, without departing from the scope of the present invention.

The first set of tools is to be performed during software development and engineering. Another set of tools is to be used during hardware production and integration of the hardware and software.

System 100 illustrates a software engineering facility 102 and a hardware production facility 104. Within the software engineering facility 102, a software development team 106 generates source code 108 and support binary code 110 sections which comprise the functional code that will be embedded or otherwise used on the hardware produced at the hardware production facility 104.

The source code 108 and support binary code 110 are combined together in a secure binary generator 112, which uses a unique encryption system based on an external input 114. As shown in FIG. 1, this external input 114 can be a smart card, but can also be a private key or other software or hardware generated encryption device.

The external input 114 encrypts or otherwise makes the combined source code 108/support binary code 110 programming undecipherable to an outside party such as a pirate. This is a first step in the security process of the present invention, which allows the source code 108 and support binary code 110 to be freely distributed with less fear of interception and decryption.

The output of the secure binary generator 112 is an encrypted, unserialized, secure binary image of the software 116. This software 116 can now be shipped to hardware production facility 104 via unsecure means, such as the internet, because the code has been encrypted by the software facility 102 via the secure binary generator 112.

Within the hardware production facility 104, each piece of hardware is serialized by placing unique metadata tags or other chip-level tags within each piece of deliverable hardware. The metadata 118 is combined with the software 116, and an external input from a security server 120 at the serialization system 121, to create a serialized version of the software 122. This software 122 is then installed on the hardware in the production system 124.

The unique software facility 102 and production facility 104 features of the present invention are described in more detail below.

### Software Specific Security Measures

In the software engineering facility 102, the development team 106 is concerned with having the ability to perform rapid turnarounds on the software versions for debugging and testing purposes. Further, the source code 108 and support binary code 110, if possible, should be able to run on a variety of different target hardware platforms (e.g., an APPLE computer as well as a PC) to make software generation less platform-specific. Typically, software security procedures slow down the debugging and testing process by generating serialized software from the beginning of the software creation process. However, the source code 108 is not required to run on various target hardware platforms; source code 108 can run on only one type of platform, or a limited number of the platforms available, if desired.

The present invention avoids this problem by generating unserialized software 116, which can run on any piece of hardware for testing and debugging purposes. Not until the hardware unit is ready for shipment is the software 116 serialized with box specific metadata 118 and becomes serialized software 122.

Further, the secure binary generator 112 used to create the unserialized software 116 is incorporated with the compiler used to create the software 116. This means that the security components are completely integrated into the software 116 code itself.

### Unserialized Software Generation

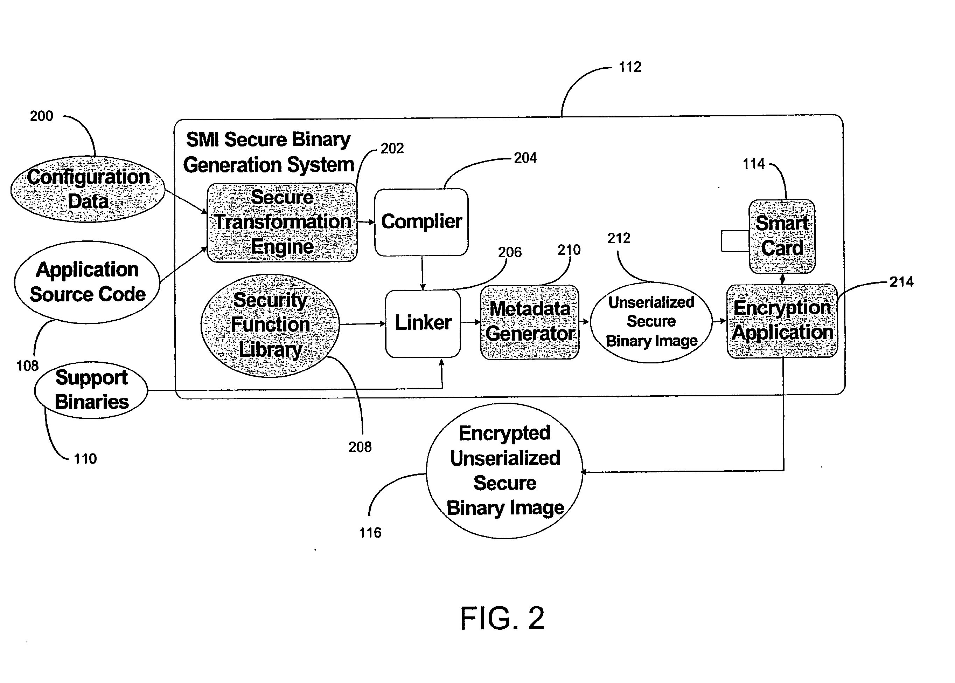

FIG. 2 illustrates a block diagram of how an unserialized binary image is generated utilizing the present invention.

The secure binary generator 112 comprises several components. The source code 108 and configuration data 200 are combined and/or modified by the Secure Transformation Engine 202. The combination of the source code 108 and configuration data 200 is typically determined by the development team 106, determined by but can also be determined by other features. For example, and not by way of limitation, the programming team 106 can determine that a specific subroutine or set of subroutines within the source code 108 are key to the operation of the source code 108. These subroutines are then used as data points or, the line numbers or other features of the subroutines are used as the encryption or serialization code to generate a secure copy of the source code 108, or to assign a given copy of the source code 108 to a specific hardware platform.

As discussed in the above example, it is not necessary to serialize or assign all of the source code 108 in the Secure Transformation Engine 202. To the contrary, for operational purposes, it is preferred that the amount of source code 108 be limited to key, stable and mature functions within the source code 108 so that in-field software upgrades can be done by the manufacturers to fix software bugs or enhance the functionality of the source code 108 via an over-the-air (OTA) download, without the need to send an entire copy of the source code 108 to each of the deployed hardware units.

Typically, the amount of source code 108 to be assigned or serialized by the configuration data 200 would be limited to a small percentage, perhaps 3 - 5%, of the total source code 108. By limiting of the amount of source code 108 to be assigned also helps to reduce the overhead, or increase in code size, of the security features of the present invention. This is an important feature since in many applications the amount of memory in a given hardware application is limited as part of overall materiel cost savings. The combined source code 108 and configuration data 200, once passed through the secure transformation engine 202, are then compiled in the compiler 204.

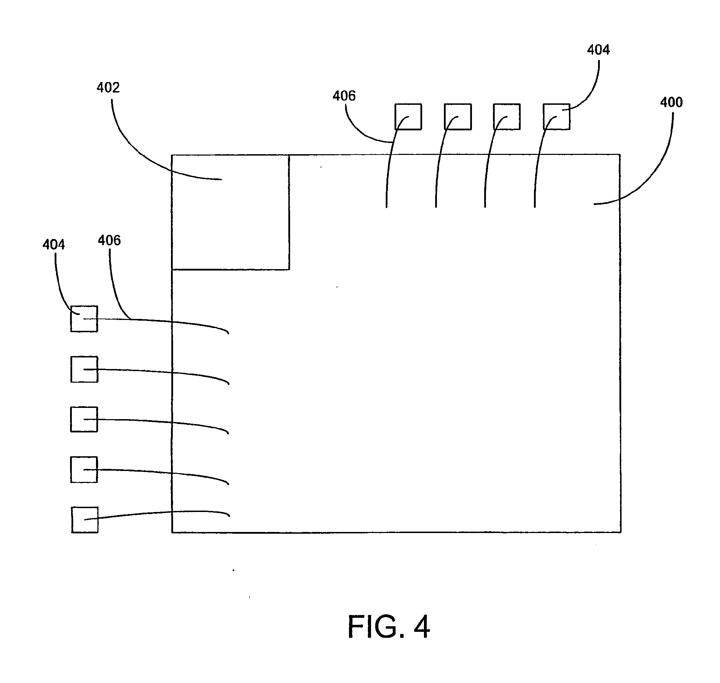

The binary code 110 is passed to the linker 206, which also receives inputs from the security function library 208. The security function library 208 provides compiled security functions to enable the cryptographic coupling between the source code 108 and the embedded hardware chip as shown in FIG. 4, discussed herein below. These compiled security functions, also called library functions, implement the communication protocol between the embedded hardware chip's security functions and the source code 108. This communication protocol can vary depending on the chip used in a given application. Further, the software 116 implements the cryptographic coupling and encryption algorithm provided by security function library 208. The encryption algorithm can be of any variety, such as RSA, IDEA, DES, AES, or other algorithms, or combinations of these algorithms, without departing from the scope of the present invention.

The linker 206 then takes the output of the compiler 204 links the binary code 110 and the security function library code 208 together, and passes this code along to the metadata generator 210. The metadata generator 210 places the lines in the code to allow for later serialization of the code once the code has been mated with a specific piece of hardware. For example, and not by way of limitation, the metadata generator can place APPLE specific or PC specific checkpoints into a given piece of code such that when the code is finally mated up to a given computer, the APPLE or PC specific checkpoints can be supplied with values or other verifications to ensure a one-to-one security correspondence between the software and the hardware.

In this process, the resulting software image 212 has all of the "hooks" in place to accept the serialization information. However since the software image 212 is unserialized at this point, it can be loaded into any platform that the code is designed to perform on. The unserialized code 212 will work as any standard software would work, but has security measures in place but not yet activated. Only after the code 116 has been serialized to a particular unit will the security functionality become active.

### Additional Encryption

If desired, the image 212 can be sent along to the hardware facility 104 for inclusion with a piece of hardware. Since the image 212 is not yet serialized, image 212 can be used on any platform that the metadata generator 210 prepared that image 212 for. However, the transportation of the code to the hardware manufacturer may take place over "open" or "unsecure" lines, such as the Internet, or via radio frequency (RF) transmission over satellite or cellular links, which exposes the image 212 to interception by pirates or other third parties.

As such, the present invention further comprises an encryption application 214 which uses a smart card 114 or other encryption method or apparatus to encrypt the image 212 to create unserialized software 116.

The smart card 114 or other method used to encrypt the software has a matched card or encryption method, such that the encrypted image from one smart card 114 can only be decrypted by its matched card. This then allows the software providers to securely distribute the unserialized software 116 via the Internet or any other low cost method without fear of it being intercepted and used by unauthorized third parties.

### Reverse Engineering Protection

During the generation of image 212, it is also possible to introduce software reverse engineering protection into the unserialized software 116. This is another possible layer of security functionality, since it prevents unauthorized third parties from decompiling the code and attempting to remove the security functions. Although the code that has been transformed by the reverse engineering protection tool is functionally identical to the un-protected code, the fundamental structure of the code itself is changed so that it is unrecognizable. This reverse engineering tool can use a variety of standard, publicly available algorithms which can be introduces within the secure transformation engine 202, within the metadata generator 210, or elsewhere depending on the level of security desired and the specifics of the algorithm.

### Hardware Security Features

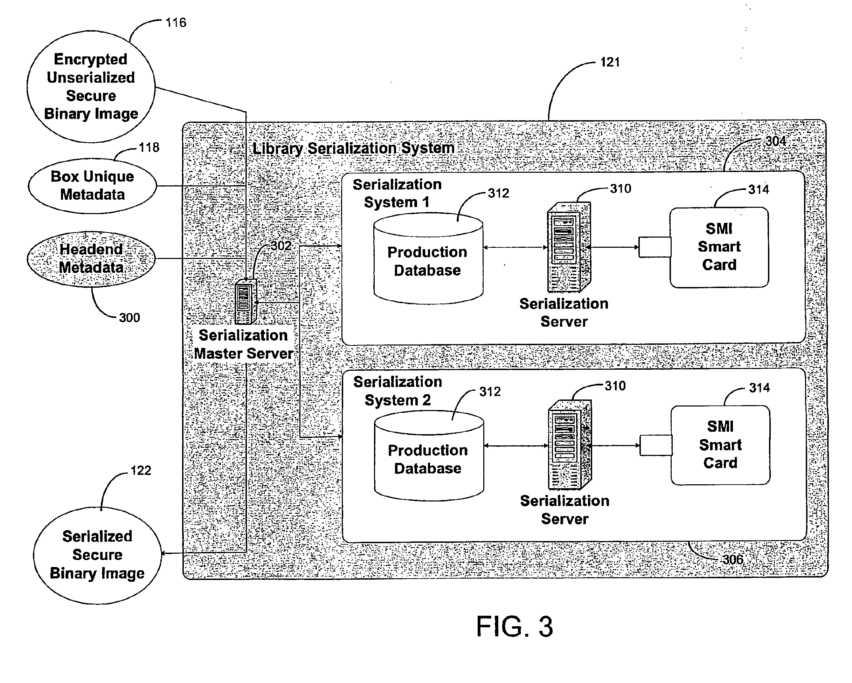

FIG. 3 illustrates the system hardware security features of the present invention.

Once the unserialized code 116 is delivered to the production facility 104, the unserialized code 116 is mated to a specific piece of hardware, or "serialized" and mated to a specific chip or chipset. Once the serialization process is completed, the specific piece of software will not work on any other piece of hardware.

Unserialized code 116 is mated with hardware-specific Metadata 118, as well as additional metadata 300 gathered from the headend server 120. These data inputs are combined in the serialization master server 302, with further inputs from redundant serialization systems 304 and 306.

To integrate the unserialized code 116, the Serialization Master Server 302 interacts with hardware security functions that are embedded in the chip or chips that are resident in the physical hardware, which will be described in more detail below. In addition to the information obtained from the hardware, additional metadata 300 information is gathered from the headend server 120.

The headend server 300 is typically housed in an off-site location from the hardware production facility 104. The headend server 300 can be provided by the software development facility 102, or can be provided by a third party, such that the security of the serialized code and the security functions that are being used within a given hardware/software integration, are known to as few outside parties as possible.

The limited access to the headend server 120 and headend metadata 300 prevents the Serialization System 121 from being used by any unauthorized parties. As part of the system architecture, there is a "keep alive" mechanism built into the Serialization Master Server 302. The serialization master server 302 must maintain periodic communication with the headend server 120, or the serialization master server 302 will be prevented from creating additional secure images 122. There are failsafe and alternative communications modes that allow for alternative means of communication between serialization master server 302 and headend server 120, should the typical communication lines or service be disrupted.

The limited access to the headend server 120 prevents the disclosure of the box unique metadata 118 from defeating the security system of the present invention. Even if the chip masks were stolen or otherwise obtained, pirates or other third parties could not create software that would work with chips made from these masks, because the security features associated with the headend metadata would not be present in the chip-software pairing.

As an alternative to an off-site headend server 120 solution, the functions performed by the headend server 120 can be implemented by the serialization master server 302. Although this may allow for production to be self-contained, such an approach will potentially increase the risk of compromising the security functions, e.g., the box unique metadata 118, etc., that are described herein.

The serialization master server 302 also employs inputs from the serialization systems 304 and 306. These systems 304 and 306 are redundant such that if one were to be unavailable because of failure or maintenance issues, the other system 304 or 306 would continue to serialize the software 116. As such, a description of one of the systems 304 or 306 suffices to describe the other system 304 or 306. Further, additional redundancy, i.e., a third, fourth, or fifth system 304 or 306 can be employed without departing from the scope of the present invention.

Serialization server 310 queries production database 312 to determine which specific piece of hardware is being processed for a given software image 116. The serialization server 310 may be a personal computer, workstation, or one or more smart cards. Once the specific piece of hardware is located, serialization server queries smart card 314, which is the mating card to smart card 114, or, alternatively or in combination, is the software algorithm or other encryption tool used in software production facility 102, to decrypt the software 116 prior to serialization.

The serialization server 310 uses the specific hardware data and smart card 114 data to decrypt the software 116, and integrates the hardware metadata 118 and headend metadata 300 to create the serialized image 122. The hardware metadata 118 and headend metadata 300 may be pre-programmed values, dynamic values, or a combination of pre-programmed and dynamic values, depending on the level of security desired and the level of complexity of the security system available or desired. This image 122 of the software is then loaded on a specific piece of hardware that comprises the specific hardware associated with the hardware metadata 118. Once this step has been successfully completed, a final secured and paired binary image 122 has been created.

The present invention has many advantages in that it does not adversely affect the production throughput of the production line either in the software facility 102 or in the hardware facility 104. The present invention does not overly burden the time it takes to create the hardware or software, and, as such, is easily integrated into existing production lines in both facilities 102 and 104. The additional time to serialize the software is minimal compared to the overall time of integrating the software and hardware, and as such, does not add significant cost or time to the manufacturing process.

Finally, when the serialization master server 302 interacts with the headend server 120, and requests headend metadata 300, the system 100 of the present invention provides a secure way of providing traceability to the manufacturing process. Since the Serialization Master Server 302 must interact with the Headend Server 120, there is now a separate, accurate accounting for the number of keys (i.e., headend metadata 300 data sets) requested, when the request was made and by which production line. Since there is a one to one correspondence between the number of keys used and the number of software images 122 programmed into a STB, the software developer knows exactly how many software images 122 have been used, and by which company. This provides software developers with a significant audit trail that they can use to ensure accurate reporting of royalty payments.

### Chip Level Protection and Generation of Metadata

FIG. 4 illustrates a functional overview of a chip designed in accordance with the present invention.

A chip 400 which will utilize the software image 116 is fabricated with a security functionality block 402 built into the chip 400. Typically, chip 400 is a central processing unit (CPU) chip, or a transport chip used in STB applications, but can be any chip where software will be resident.

To defeat or alter the hardware characteristics of the hardware security features of the present invention, the unauthorized parties would have to re-engineer or re-manufacture the chip 400. In many cases, the technology involved in the original manufacture of these components is so complex that it would be extremely difficult if not impossible for a third party to duplicate. This makes the present invention more likely to thwart attempts to clone the software, because to successfully do so, unauthorized third parties would need to invest more time and money than would be profitable for such a venture.

Embedded into the chip 400, in security functionality block 402, would be a secret value or algorithm to calculate a known value embedded into the chip 402 Read Only Memory (ROM), One Time Programmable (OTP) Memory, or similar type write-once, non-volatile memory. This value or functionality would only be known to the hardware manufacturer, or to the body generating the security functionality block 402, and by no outside sources.

The chip 400 now has security functionality block 402 programmed into chip 400 at the wafer level during the original fabrication of chip 400. After the programming of the values desired in security functionality block 400, chip 400 is wire bonded such that the inputs and outputs of chip 400 are accessible. So, pads 404 and wire bonds 406 are attached such that the inputs and outputs of chip 400 are accessible to the outside world.

However, the values and/or algorithms that act as security functions within security functionality block 402 are not accessible to the outside world. Such functions are only available internally to chip 400. Thus, once the chip 400 is encapsulated in a package, or conformally coated onto a printed-circuit board, the security functionality block 402 is locked such that the values and or algorithms located therein cannot be reprogrammed at a later date.

Once the wafers have been successfully programmed and locked, access to the security functionality block 402 is limited to on-chip 400 access, and the chip 400 is encapsulated or packaged, it becomes very difficult to determine the values and/or algorithms used on a given chip 400. To access that part of chip 400, a third party would have to remove chip 400 from the original packaging. This is very difficult technically and requires sophisticated machinery to perform. Even if the equipment if available, there would be a high probability of destroying chip 400 in the process. Even if chip 400 survived this step, there would be the problem of trying to re-write the protected write-once memory portion of security functionality block 402.

Several additional security features can be employed in chip 400 to strengthen the value of the security functionality block 402. The algorithm or values used within security functionality block 402 can be done in a cryptographic manner, such that the original programmed value is modified in an undecipherable way unless a third party knows the root seed or kernel of the cryptographic function. Such an addition can be as simple as flipping a particular bit in the programmed value to performing a complete cryptographic scrambling of the key, or can utilize more complicated cryptographic functions.

### Security Operations

The Anti-Cloning tool of the present invention utilizes the Secure Transformation Engine (STE) 202 routines which perform periodic validation between the serialized image 122 and the resulting hardware (e.g., chip 400). Since the serialized image 122 comprises embedded security functionality, which corresponds with a specific chip 400, it is extremely difficult to change or modify chip 400 hardware to fool the software 122, and vice versa. The serialized image 122 also routinely interrogates the target chip 400 to validate the pairing between software 122 and chip 400. If pairing cannot be validated, the software image 122 will cease processing, thus rendering the chip 400 functionally useless.

It is important that the routines used to interrogate chip 400 are strategically selected. The routines used within security functionality block 402 must be routines that are called upon with some regularity, but not so frequently as to affect the performance of the overall system. As with the overall design philosophy, a tiered approach can be used in selecting the functions to protect with the tool. Some of the software routines will be done on a frequent (several times a second or minute) basis, some will be done on an infrequent basis (once or twice a day or week) and some only on start-up. This will ensure that if someone tries to attack the system, it would be unlikely that they would be able to find all of the routines that have been protected using the secure transformation engine 202.

### Flowchart

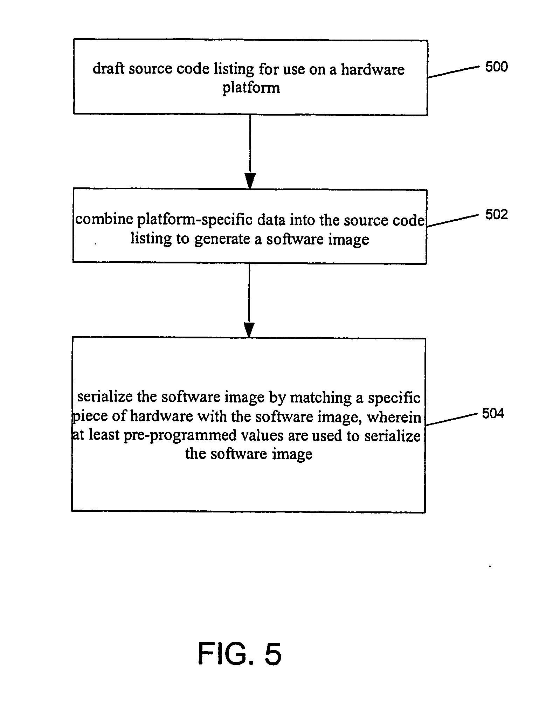

FIG. 5 is a flowchart illustrating the steps of the present invention.

Box 500 illustrates performing the step of drafting source code listing for use on a hardware platform.

Box 502 illustrates performing the step of combining platform-specific data into the source code listing to generate a software image.

Box 504 illustrates performing the step of serializing the software image by matching a specific piece of hardware with the software image, wherein at least pre-programmed values generated by a headend server are used to serialize the software image.

### Conclusion

This concludes the description of the preferred embodiment of the invention. In summary, embodiments of the invention provide methods and apparatuses for increasing the difficulty of cloning high-value software. A system in accordance with the present invention comprises a secure transformation engine, which receives and combines source code and configuration data to generate a software listing, a compiler, coupled to the secure transformation engine, for compiling the software listing and generating a compiled listing, a metadata generator, coupled to the compiler, for integrating hardware specific metadata with the compiled listing to generate an unserialized image, and a serialization server, which receives the unserialized image and serializes the unserialized image using at least pre-programmed values.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A method for increasing the security in a software environment, comprising:
drafting source code listing for use on a hardware platform;
combining platform-specific data into the source code listing to generate a software image;
and
serializing the software image, using a serialization server, by matching a specific piece of hardware with the software image, wherein at least pre-programmed values are used to serialize the software image, **characterized in** the steps of generating the pre-programmed values using a headend server, the pre-programmed values being programmed onto a chip for which the software image is being serialized, and the serialization server being in at least periodic contact with the headend server; and disabling the serialization server from serializing the software when the at least periodic contact is severed.

2. The method of claim 1, wherein the software image is a generic software image that will operate on more than one platform.

3. The method of claim 2, further comprising encrypting the generic software image to create a generic secure software image prior to serializing.

4. The method of claim 3, wherein the pre-programmed values are stored on the chip during the manufacturing of the chip.

5. The method of claim 4, wherein the pre-programmed values are accessible only within the chip.

6. The method of claim 5, further comprising serializing the image using dynamic values.

7. The method of claim 6, wherein the encryption is performed using a smart card.

8. The method of claim 7, wherein the headend server is at a location remote from the manufacture.

9. A system for increasing the difficulty of cloning software, comprising:
a secure transformation engine, which receives and combines source code and configuration data to generate a software listing;
a compiler, coupled to the secure transformation engine, for compiling the software listing and generating a compiled listing;
a metadata generator, coupled to the compiler, for integrating hardware specific metadata with the compiled listing to generate an unserialized image;
a serialization server, which receives the unserialized image and serializes the unserialized image using at least pre-programmed values,
**characterised in that** the system further comprises
a headend server which generates the pre-programmed values, wherein the pre-programmed values are programmed onto a chip for which the source code is being serialized and wherein the headend server and the serialization server are in at least periodic contact, and when the at least periodic contact is severed, the serialization server is disabled from serializing the unserialized image,

10. The system of claim 9, wherein the serialization server further uses hardware-specific metadata to serialize the unserialized image.

11. The system of claim 10, further comprising an encryption engine, coupled to the metadata generator, for encrypting the unserialized image.

12. The system of claim 11, wherein the serialization server decrypts the encrypted unserialized software prior to serialization.

13. The system of claim 12, wherein the encryption and decryption are performed using a smart card.

14. The system of claim 13, wherein the pre-programmed values are stored on the chip during the manufacturing of the chip.

15. The system of claim 14, further wherein the pre-programmed values are accessible only within the chip.

16. The system of claim 15, wherein the software listing can operate on more than one platform.

17. The system of claim 9, wherein the pre-programmed values are encrypted.

## Patentansprüche

1. Verfahren zur Erhöhung der Sicherheit in einer Softwareumgebung, umfassend die folgenden Schritte:
Entwerfen eines Quellcode-Listings zur Verwendung auf einer Hardwareplattform;
Einfügen plattformspezifischer Daten in das Quellcode-Listing, um ein Software-Abbild zu erzeugen; und
Serialisieren des Software-Abbilds unter Verwendung eines Serialisierungsservers, indem ein spezifisches Stück Hardware mit dem Software-Abbild abgestimmt wird, wobei zumindest vorprogrammierte Werte verwendet werden, um das Software-Abbild zu serialisieren; **gekennzeichnet durch** die folgenden Schritte:
Erzeugen der vorprogrammierten Werte unter Verwendung eines Kopfstationsservers, wobei die vorprogrammierten Werte in einen Chip einprogrammiert werden, für den das Software-Abbild serialisiert wird, und wobei der Serialisierungsserver in zumindest periodischem Kontakt mit dem Kopfstationsserver ist; und
Verhindern, dass der Serialisierungsserver die Software serialisiert, wenn der zumindest periodische Kontakt abgebrochen wird.

2. Verfahren nach Anspruch 1, wobei das Software-Abbild ein generisches Software-Abbild ist, das auf mehr als einer Plattform laufen soll.

3. Verfahren nach Anspruch 2, ferner den folgenden Schritt umfassend:
Verschlüsseln des generischen Software-Abbilds, um vor der Serialisierung ein generisches sicheres Software-Abbild zu erzeugen.

4. Verfahren nach Anspruch 3, wobei die vorprogrammierten Werte während der Herstellung des Chips auf dem Chip gespeichert werden.

5. Verfahren nach Anspruch 4, wobei die vorprogrammierten Werte nur innerhalb des Chips zugänglich sind.

6. Verfahren nach Anspruch 5, ferner den folgenden Schritt umfassend: Serialisieren des Abbilds unter Verwendung dynamischer Werte.

7. Verfahren nach Anspruch 6, wobei die Verschlüsselung unter Verwendung einer Smartcard durchgeführt wird.

8. Verfahren nach Anspruch 7, wobei sich der Kopfstationsserver an einem von der Herstellung entfernten Ort befindet.

9. System zur Erhöhung der Schwierigkeit des Klonens von Software, umfassend:
eine sichere Transformationsmaschine, die Quellcode und Konfigurationsdaten empfängt und zusammenfügt, um ein Software-Listing zu erzeugen;
einen Kompiler, der mit der sicheren Transformationsmaschine gekoppelt ist, zum Kompilieren des Software-Listings und Erzeugen eines kompilierten Listings;
einen Metadatengenerator, der mit dem Kompiler gekoppelt ist, zum Integrieren hardwarespezifischer Metadaten in das kompilierte Listing, um ein nichtserialisiertes Abbild zu erzeugen;
einen Serialisierungsserver, der das nichtserialisierte Abbild empfängt und das nichtserialisierte Abbild zumindest unter Verwendung von vorprogrammierten Werten serialisiert;
**dadurch gekennzeichnet, dass** das System ferner umfasst:
einen Kopfstationsserver, der die vorprogrammierten Werte erzeugt, wobei die vorprogrammierten Werte in einen Chip einprogrammiert werden, für den der Quellcode serialisiert wird, und wobei der Kopfstationsserver und der Serialisierungsserver in zumindest periodischem Kontakt sind, und wenn der zumindest periodische Kontakt getrennt wird, verhindert wird, dass der Serialisierungsserver das nichtserialisierte Abbild serialisiert.

10. System nach Anspruch 9, wobei der Serialisierungsserver ferner hardwarespezifische Metadaten verwendet, um das nichtserialisierte Abbild zu serialisieren.

11. System nach Anspruch 10, ferner umfassend eine Verschlüsselungsmaschine, die mit dem Metadatengenerator gekoppelt ist, zum Verschlüsseln des nichtserialisierten Abbilds.

12. System nach Anspruch 11, wobei der Serialisierungsserver die verschlüsselte nichtserialisierte Software vor der Serialisierung entschlüsselt.

13. System nach Anspruch 12, wobei die Verschlüsselung und Entschlüsselung unter Verwendung einer Smartcard durchgeführt werden.

14. System nach Anspruch 13, wobei die vorprogrammierten Werte während der Herstellung des Chips auf dem Chip gespeichert werden.

15. System nach Anspruch 14, wobei die vorprogrammierten Werte ferner nur innerhalb des Chips zugänglich sind.

16. System nach Anspruch 15, wobei das Software-Listing auf mehr als einer Plattform laufen kann.

17. System nach Anspruch 9, wobei die vorprogrammierten Werte verschlüsselt sind.

## Revendications

1. Procédé pour augmenter la sécurité dans un environnement logiciel, comprenant:
le tirage d'un listing de code source pour une utilisation sur une plateforme matérielle;
la combinaison de données spécifiques de la plateforme à l'intérieur du listing de code source afin de générer une image logicielle; et
la mise en série de l'image logicielle, en utilisant un serveur de mise en série, en faisant se correspondre une pièce spécifique de matériel avec l'image logicielle, dans lequel au moins des valeurs préprogrammées sont utilisées pour mettre en série l'image logicielle,
**caractérisé par** les étapes de :
génération des valeurs préprogrammées en utilisant un serveur d'extrémité de tête, les valeurs préprogrammées étant programmées sur une puce pour laquelle l'image logicielle est en train d'être mise en série, et le serveur de mise en série étant en au moins un contact périodique avec le serveur d'extrémité de tête; et par
désactivation du serveur de mise en série quant à une mise en série du logiciel, lorsque l'au moins un contact périodique est séparé.

2. Procédé selon la revendication 1, dans lequel l'image logicielle est une image logicielle générique qui va fonctionner sur plus d'une plateforme.

3. Procédé selon la revendication 2, comprenant en outre le cryptage de l'image logicielle générique afin de créer une image logicielle de sécurité générique avant la mise en série.

4. Procédé selon la revendication 3, dans lequel les valeurs préprogrammées sont stockées sur la puce pendant la fabrication de la puce.

5. Procédé selon la revendication 4, dans lequel les valeurs préprogrammées sont accessibles seulement à l'intérieur de la puce.

6. Procédé selon la revendication 5, comprenant en outre la mise en série de l'image en utilisant des valeurs dynamiques.

7. Procédé selon la revendication 6, dans lequel le cryptage est réalisé en utilisant une carte à puce.

8. Procédé selon la revendication 7, dans lequel le serveur d'extrémité de tête est en une localisation éloignée du site de fabrication.

9. Système pour augmenter la difficulté de cloner un logiciel, comprenant:
un moteur de transformation de sécurité, qui reçoit et combine un code source et des données de configuration afin de générer un listing de logiciel;
un compilateur, couplé au moteur de transformation de sécurité, pour compiler le listing de logiciel et pour générer un listing compilé;
un générateur de métadonnées, couplé au compilateur, pour intégrer des métadonnées spécifiques du matériel avec le listing compilé afin de générer une image non mise en série;
un serveur de mise en série, qui reçoit l'image non mise en série et qui met en série l'image non mise en série en utilisant au moins des valeurs préprogrammées,
**caractérisé en ce que** le système comprend en outre un serveur d'extrémité de tête qui génère les valeurs préprogrammées, dans lequel les valeurs préprogrammées sont programmées sur une puce pour laquelle le code source est en cours de mise en série et dans lequel le serveur d'extrémité de tête et le serveur de mise en série sont en au moins un contact périodique, et lorsque l'au moins un contact périodique est séparé, le serveur de mise en série est désactivé quant à la mise en série de l'image non mise en série.

10. Système selon la revendication 9, dans lequel le serveur de mise en série utilise en outre des métadonnées spécifiques du matériel pour mettre en série l'image non mise en série.

11. Système selon la revendication 10, comprenant en outre un moteur de cryptage, couplé au générateur de métadonnées, pour crypter l'image non mise en série.

12. Système selon la revendication 11, dans lequel le serveur de mise en série décrypte le logiciel non mis en série crypté avant mise en série.

13. Système selon la revendication 12, dans lequel le cryptage et le décryptage sont réalisés en utilisant une carte à puce.

14. Système selon la revendication 13, dans lequel les valeurs préprogrammées sont stockées sur la puce pendant la fabrication de la puce.

15. Système selon la revendication 14, dans lequel en outre les valeurs préprogrammées sont accessibles seulement à l'intérieur de la puce.

16. Système selon la revendication 15, dans lequel le listing de logiciel peut fonctionner sur plus d'une plateforme.

17. Système selon la revendication 9, dans lequel les valeurs préprogrammées sont cryptées.
